# FASCICULE DE BREVET EUROPEEN

(11) **EP 2 707 920 B1**
(45) Date de publication et mention de la délivrance du brevet: **01.07.2015**
(21) Numéro de dépôt: 12719361.3
(22) Date de dépôt: 02.05.2012
(51) Int. Cl.: H01M 8/02, H01M 8/24, H01M 8/10

(54) **PILE A COMBUSTIBLE AVEC COLLECTEURS A JOINTS INJECTEURS INDIVIDUELS**
BRENNSTOFFZELLE MIT VERTEILERN MIT INDIVIDUELLEN INJEKTORDICHTUNGEN
FUEL CELL COMPRISING MANIFOLDS HAVING INDIVIDUAL INJECTOR SEALS

(30) Priorité: 09.05.2011 FR 1153956
(43) Date de publication de la demande: 19.03.2014
(73) Titulaire: Commissariat à l'Énergie Atomique et aux Énergies Alternatives, 75015 Paris (FR)
(72) Inventeur: POIROT-CROUVEZIER, Jean-Philippe, F-38450 Saint-Georges-de-Commiers (FR)
(74) Mandataire: Guérin, Michel
(86) Numéro de dépôt international: PCT/EP2012/058017
(87) Numéro de publication internationale: WO 2012/152624

(56) Documents cités:
- EP-A2- 1 677 380
- US-A- 5 532 073
- US-A1- 2005 214 620
- US-A1- 2009 130 524
- US-A1- 2010 209 800

## Description

L'invention concerne les piles à combustible et en particulier les piles à hydrogène.

Une pile à combustible est un empilement de cellules élémentaires dans lesquelles a lieu une réaction électrochimique entre des produits réactifs qui sont introduits au fur et à mesure que la réaction consomme ces produits. Le combustible, qui est de l'hydrogène dans le cas d'une pile à hydrogène, est apporté au contact de l'anode ; le comburant, de l'oxygène ou de l'air pour une pile à hydrogène, est apporté au contact de la cathode. L'anode et la cathode sont séparées par un électrolyte qui peut être une membrane solide, perméable à certains des constituants de la réaction mais pas à tous. La réaction est subdivisée en deux demi-réactions (une oxydation et une réduction), qui ont lieu d'une part à l'interface anode / électrolyte et d'autre part à l'interface cathode / électrolyte. En pratique, l'électrolyte solide est une membrane perméable aux ions hydrogène H⁺ mais pas au di-hydrogène moléculaire H₂ ni aux électrons. La réaction de réduction à l'anode est une oxydation de l'hydrogène produisant des ions H⁺ qui traversent la membrane et des électrons qui sont collectés par l'anode ; à la cathode, ces ions viennent participer à la réduction de l'oxygène, nécessitant des électrons et produisant de l'eau, avec dégagement de chaleur.

L'empilement de cellules n'est que le lieu de la réaction : les réactifs doivent y être apportés, les produits et les espèces non réactives doivent en être évacués, tout comme la chaleur produite. Enfin, les cellules sont reliées électriquement en série les unes aux autres, l'anode d'une cellule étant reliée à la cathode de la cellule adjacente ; aux extrémités de l'empilement de cellules se trouvent d'un côté une anode reliée à une borne négative pour évacuer les électrons et d'un autre côté une cathode reliée à une borne positive. Un circuit extérieur est relié à ces bornes. Les électrons circulent de l'anode à la cathode par le circuit extérieur ainsi alimenté par la pile au fur et à mesure de la réaction électrochimique.

Les piles à combustible à cellules empilées classiques comprennent une superposition de plaques dites plaques bipolaires entre lesquelles sont disposés des ensembles comprenant à la fois une membrane électrolytique et une électrode de chaque côté de la membrane. Les plaques bipolaires, éventuellement associées à des joints d'étanchéité de configuration particulière, servent à collecter le courant électrique et à distribuer les gaz réactifs (hydrogène et air, ou hydrogène et oxygène) à la membrane, du côté approprié de la membrane : hydrogène du côté anode, air ou oxygène du côté cathode. Elles comprennent des canaux de distribution en regard des anodes et d'autres en regard des cathodes. Elles peuvent aussi comporter des canaux de refroidissement. Sur leur périphérie, les plaques sont percées d'ouvertures servant à amener les gaz réactifs, et d'ouvertures servant à évacuer les produits de la réaction. Les ouvertures d'admission de gaz réactif forment, par la superposition des plaques en contact étroit les unes avec les autres, des collecteurs d'alimentation en gaz réactif. Les ouvertures d'évacuation forment de la même manière des collecteurs d'évacuation des produits de la réaction. Des joints d'étanchéité sont prévus pour que les fluides restent confinés dans ces collecteurs, mais la conformation des plaques bipolaires et/ou des joints d'étanchéité est telle que des passages sont formés dans les collecteurs aux endroits où on veut distribuer le fluide dans une cellule pour que le fluide pénètre dans cette cellule, du côté désiré sans aller vers l'autre côté. Ces passages aiguillent les gaz réactifs vers la cellule par l'intermédiaire de canaux de distribution formés dans les plaques, qui distribuent le gaz aussi uniformément que possible vers la membrane électrolytique.

Il en est de même pour les produits de réaction, les plaques et joints étant conformés pour permettre de recueillir et évacuer les produits de réaction du côté de l'anode et/ou de la cathode vers le collecteur d'évacuation.

Ainsi, le collecteur d'alimentation en hydrogène d'une cellule classique est constitué par l'empilement de plaques et joints conformés de telle manière que l'hydrogène puisse se répandre dans les cellules du côté de l'anode mais absolument pas du côté de la cathode. C'est le contraire pour le collecteur d'alimentation en air ou oxygène.

En bout d'empilement ces ouvertures formées dans les plaques sont reliées respectivement à un conduit d'alimentation respectif pour chaque produit réactif et à un conduit d'évacuation pour les produits de la réaction.

L'empilement de cellules est maintenu serré par des tirants traversant toutes les plaques bipolaires et les membranes. La pression exercée assure l'étanchéité des cellules les unes par rapport aux autres et assure l'étanchéité entre le côté anode et le côté cathode de la cellule.

Dans l'art antérieur, on a proposé des structures dans lesquelles les plaques bipolaires sont découpées de manière complexe pour définir à la fois les canaux de distribution de fluide et les ouvertures qui, dans la superposition de plaques, forment les collecteurs d'alimentation et d'évacuation. La pression exercée entre les plaques serrées les unes contre les autres établit l'étanchéité désirée là où il ne doit pas y avoir de communication entre un collecteur et une cellule (par exemple pas de communication entre un collecteur d'alimentation en hydrogène et le côté cathode de la cellule, et pas de communication entre un collecteur d'alimentation en air et le côté anode). Là où on doit avoir une communication, des découpes dans la plaque bipolaire sont prévues.

Le brevet FR 2 887 689 décrit de telles plaques bipolaires, qui peuvent être en métal embouti et découpé, ou en d'autres matériaux comme du polymère chargé par du graphite. Mais il n'est pas possible dans ce cas de faire les plaques sous forme d'une seule tôle.

On a également proposé des structures dans lesquelles une plaque de joint périphérique découpée de manière adéquate assure l'étanchéité partout où elle doit être assurée mais laisse passer le gaz réactif d'un collecteur vers une cellule là où il doit passer. Le joint est plan du côté de la membrane électrolytique pour pouvoir supporter cette dernière et il a une forme plus sophistiquée du côté de la plaque bipolaire. Les canaux de distribution qui vont du collecteur vers la surface active de la membrane peuvent être réalisés dans le joint.

Le brevet US 5 482 792 décrit une telle structure. La distribution uniforme de gaz peut même être réalisée par une plaque de mousse serrée entre le joint périphérique et la plaque bipolaire. Les pièces de l'empilement sont complexes à réaliser, leur coût est élevé, et leur épaisseur importante, ce qui nuit à la compacité de la pile. Enfin, une rigidité ni trop faible (pour pouvoir faire des canaux) ni trop grande (pour la fonction d'étanchéité) de la plaque formant le joint complexe est difficile à obtenir.

Dans les deux exemples ci-dessus, on doit faire des plaques bipolaires et des plaques de joints différentes selon qu'il s'agit du côté anodique ou cathodique des cellules, ce qui augmente le coût de fabrication.

Le brevet US 5 532 073 décrit des rondelles d'injection dont la configuration est telle qu'elles ne pourraient pas être appliquées contre les membranes électrolytiques sans les détériorer.

La publication US 2010/0209800 décrit des joints plats soudés aux plaques et qui ne pourraient pas être appliqués contre une membrane électrolytique souple sans la détériorer.

Selon l'invention on propose une pile à combustible à cellules empilées comprenant une superposition de plaques dites plaques bipolaires entre lesquelles sont disposés des ensembles comprenant à la fois une membrane électrolytique et une électrode de chaque côté de la membrane, les plaques étant pourvues à leur périphérie d'ouvertures servant à amener les gaz réactifs, et d'ouvertures servant à évacuer les produits de la réaction, les ouvertures de plaques adjacentes étant alignées pour former des collecteurs d'alimentation ou d'évacuation traversant tout l'empilement de cellules. Les ouvertures des collecteurs d'alimentation sont entourées de joints individuels annulaires séparés les uns des autres et distincts des plaques bipolaires, certains joints formant joints d'étanchéité entre l'ouverture et une cellule, et d'autres joints formant injecteurs pour un gaz réactif à amener dans une cellule ou à évacuer d'une cellule. Les joints annulaires sont formés d'au moins une tôle métallique non plane et une pièce complémentaire, la tôle métallique ayant une section, dans un plan perpendiculaire au plan des ouvertures, en forme de U, dont les branches sont évasées et ont des extrémités repliées parallèlement au fond, le fond venant s'appuyer contre la plaque bipolaire autour de l'ouverture ou contre une membrane électrolytique. L'épaisseur du joint correspond à la distance entre la plaque bipolaire et la membrane. Les joints formant injecteurs sont pourvus de passages locaux dans l'épaisseur du joint pour laisser passer le fluide et les joints formant joints d'étanchéité étant dépourvus de tels passages afin de conserver l'étanchéité. La pièce complémentaire peut être en métal ou en polymère et les passages étant formés dans la pièce complémentaire.

Les passages locaux peuvent être formés de préférence par emboutissage dans le cas de tôles métallique, ou par moulage (dans le cas de matières plastiques), ou encore par découpe.

Par forme annulaire, on entend une forme fermée mais pas nécessairement circulaire. Elle peut être elliptique ou même carrée ou rectangulaire. Elle sera de préférence circulaire si les ouvertures sont circulaires.

La forme de section en U (ou V à fond plat) de la tôle est conçue pour bien résister à la pression exercée lors de l'assemblage de l'empilement tout en assurant une certaine souplesse permettant la répartition des efforts. Le joint peut être appliqué directement contre la membrane électrolytique.

Lorsque deux tôles ayant cette forme de U à branches évasées sont soudées face-à-face, c'est par la partie plane repliée aux extrémités des branches. Le fond plat du U de la tôle métallique est appliqué contre la partie bipolaire. Le fond plat du U de l'autre tôle est appliqué contre la membrane électrolytique.

Les passages de fluide des joints injecteurs sont formés de place en place dans les branches latérales et éventuellement dans le fond plat du U, mais non dans leurs parties supérieures planes repliées, afin que ces parties conservent une continuité annulaire intégrale sur toute la périphérie des ouvertures.

Lorsque la pièce complémentaire est en matériau polymère, elle remplit le fond du U de la tôle métallique et elle déborde par une partie plane au dessus de l'ouverture du U ; cette partie plane vient s'appuyer sur la plaque bipolaire ou sur la membrane. En pratique, la pièce complémentaire aura une forme extérieure semblable à celle de la tôle métallique, mais sera plus massive puisqu'elle remplira tout l'espace intérieur entre sa surface extérieure et la surface intérieure de la tôle métallique.

De préférence, lorsque la pièce complémentaire est en matériau polymère, les passages de fluide des joints injecteurs sont des ouvertures locales dans cette pièce ; ces ouvertures sont formées, en principe lors du moulage de la pièce, dans la partie débordante de la pièce, c'est-à-dire en dehors du U de la tôle métallique.

Là où un collecteur d'alimentation (ou d'évacuation) passe à travers une cellule, donc successivement à travers une région d'anode, puis à travers la membrane, puis à travers une région de cathode, on placera un joint avec passages (joint injecteur) ou un joint sans passage (joint d'étanchéité) selon que le collecteur doit communiquer ou non avec la région considérée. Ainsi, pour un collecteur d'alimentation en hydrogène, on placera un joint injecteur entre la plaque bipolaire et la membrane du côté de l'anode, et un joint d'étanchéité entre une autre plaque bipolaire et la membrane du côté de la cathode.

D'autres caractéristiques et avantages de l'invention apparaîtront à la lecture de la description détaillée qui suit et qui est faite en référence aux dessins annexés dans lesquels :
- la figure 1 représente le principe général d'une pile selon l'invention ;
- la figure 2 représente la première tôle d'un joint composé de deux tôles accolées en forme d'anneau circulaire ;
- la figure 3 représente une vue agrandie de la première tôle, où l'on voit la section en U à branches évasées et extrémités repliées de la tôle ;
- la figure 4 représente une vue d'un joint d'étanchéité formé de deux tôles soudées ;
- la figure 5 représente une vue d'un joint injecteur formé de deux tôles soudées ;
- la figure 6 représente une vue éclatée d'un joint étanche formé d'une tôle métallique et d'une pièce complémentaire en matériau polymère ;
- la figure 7 représente une vue éclatée d'un joint injecteur formé d'une tôle métallique et d'une pièce complémentaire en matériau polymère ;
- la figure 8 représente une application de l'invention à une injection par collecteurs multiples.

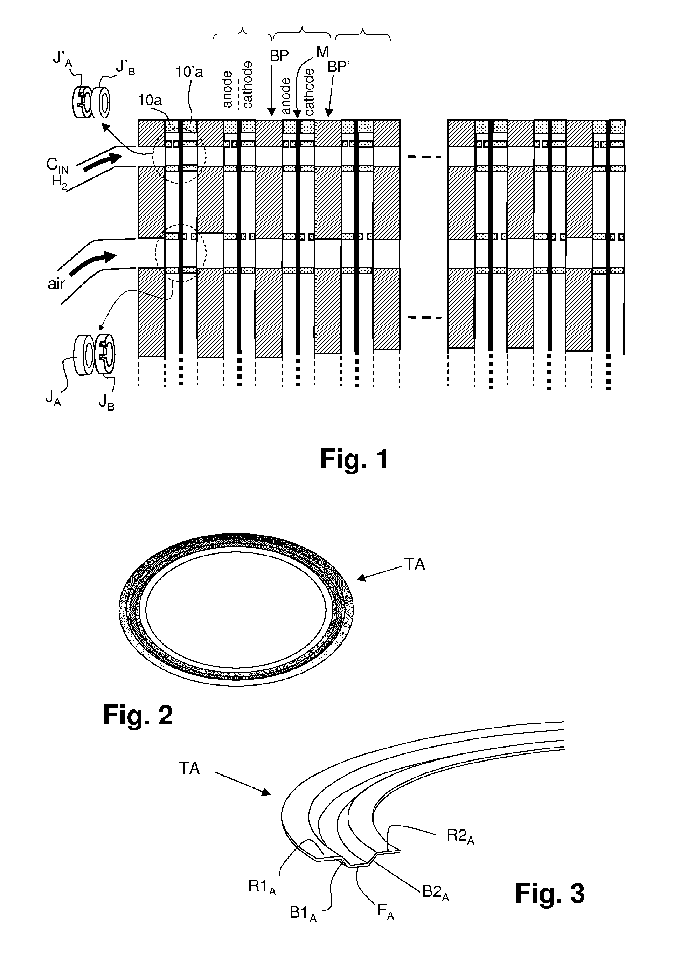

Sur la figure 1, on a représenté schématiquement, en coupe transversale, un empilement de cellules de pile à combustible à hydrogène et air.

Les cellules sont chacune composée d'une membrane électrolytique centrale M, entre deux plaques bipolaires BP et BP'. On considère que l'anode est à gauche de chaque membrane, la cathode à droite. Une plaque est commune à deux cellules adjacentes. Les plaques sont représentées comme des blocs non détaillés pour simplifier (les canaux de distribution qui amènent les gaz dans les zones actives ne sont pas représentés) et on n'a représenté que les parties de plaque qui comportent les collecteurs d'alimentation en air et en hydrogène (en principe à la périphérie des plaques). Les collecteurs d'évacuation ne sont pas représentés. Ils peuvent être constitués comme les collecteurs d'alimentation en air. Les collecteurs de refroidissement éventuellement présents ne sont pas représentés non plus.

Des joints d'étanchéité, notamment des joints périphériques complètement étanches 10a, 10'a, séparent la membrane de chacune des plaques bipolaires.

Des ouvertures alignées percées dans les plaques bipolaires forment les collecteurs d'alimentation, reliés à l'extrémité de l'empilement à des conduits d'amenée d'hydrogène et d'air respectivement.

Entre deux ouvertures successives d'un même collecteur d'alimentation, formées dans deux plaques bipolaires successives, on trouve
- un premier joint annulaire J_{A} qui entoure complètement la première ouverture et qui est serré entre la première plaque et la membrane (du côté anode de la membrane),
- et un deuxième joint annulaire J_{B} qui entoure complètement la deuxième ouverture et qui est serré entre la deuxième plaque et la membrane (du côté cathode de la membrane).

Les joints servent d'appui à la membrane pour la maintenir en place dans l'empilement.

Le joint J_{A} est un joint complètement étanche, il interdit le passage de gaz réactif du collecteur d'alimentation vers le côté anode de la cellule (le collecteur étant ici le collecteur d'alimentation en air).

Le joint J_{B} est un joint injecteur. Il sert, comme le joint J_{A}, d'appui à la membrane mais il n'est pas complètement étanche. Il comporte des passages par lesquels le fluide peut passer du collecteur d'alimentation en air vers le côté cathode de la cellule. Ces passages sont représentés symboliquement par des encoches sur la périphérie des joints, qui forment une communication entre l'intérieur et l'extérieur des joints. On indiquera plus loin la constitution matérielle des joints injecteurs.

Les rôles des joints J_{A} et J_{B} seraient bien sûr inversés pour le collecteur d'alimentation en hydrogène : le premier joint J'_{A} est alors un joint injecteur pourvu de passages vers le côté anode, le deuxième joint J'_{B} est un joint complètement étanche vis-à-vis du côté cathode.

Lors du montage de l'empilement les différentes pièces sont pressées les unes contre les autres par des tirants non représentés qui traversent tout l'empilement et qui comportent les moyens de serrage appropriés (filetages et écrous). Le serrage doit être fort pour bien maintenir les membranes en place mais pas trop pour ne pas abîmer les membranes. L'effort de serrage est distribué sur tous les joints alignés le long d'un collecteur d'alimentation.

Pour réaliser les joints on utilisera de préférence au moins une tôle métallique et une pièce complémentaire ; la pièce complémentaire peut être une autre tôle métallique soudée à la première ou une pièce en matériau polymère collée à la tôle métallique et conformée par moulage pour avoir la forme désirée. Les passages de fluide pour les joints injecteurs peuvent être formés soit dans la tôle complémentaire, par découpe ou emboutissage, soit dans la pièce complémentaire, par emboutissage, usinage, ou moulage.

Les tôles métalliques sont de préférence revêtues d'une couche polymère permettant d'une part de compenser les imprécisions d'épaisseur du joint à la fabrication et d'autre part d'isoler électriquement l'injecteur de la plaque bipolaire.

La forme préférée de la première tôle métallique TA est représentée à la figure 2. Elle ne comporte pas de passages pour le fluide. Sa section dans un plan radial est mieux visible à la figure 3 qui est une vue agrandie. La section est en forme de U à branches évasées, qu'on peut également appeler V à fond plat. Le fond du U est désigné par F_{A}, les branches du U par B1_{A} et B2_{A}. Les extrémités des branches sont repliées parallèlement au fond plat du U. Ces repliements sont désignés par R1_{A} et R2_{A}.

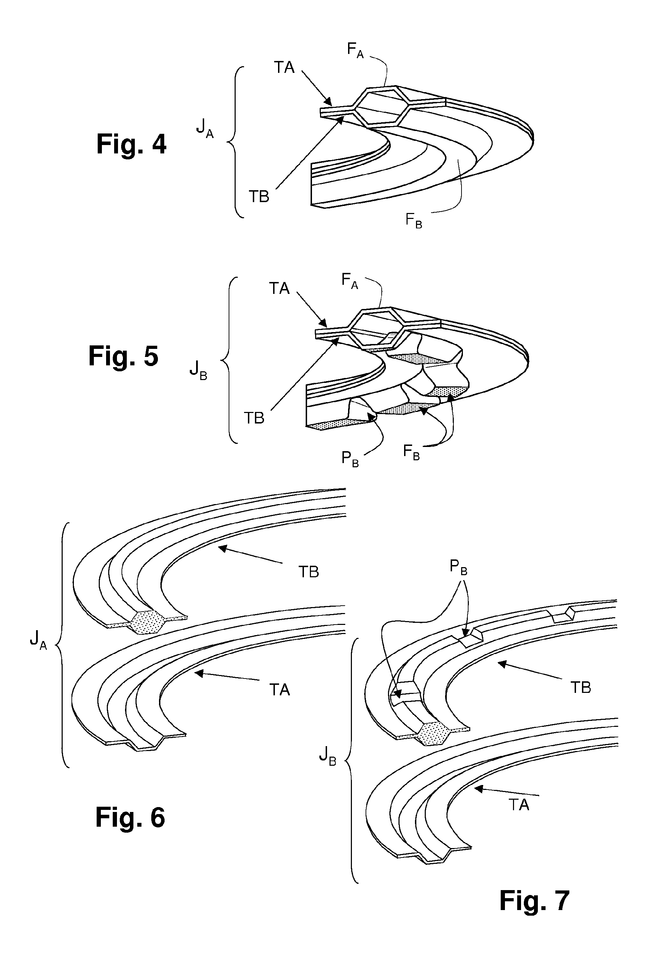

La figure 4 représente un joint d'étanchéité complet constitué par deux tôles métalliques TA et TB identiques soudées face-à-face par les extrémités repliées R1_{A}, R1_{B}, et R2_{A}, R2_{B} des branches du U évasé. Le fond F_{A} de la section en U de la tôle TA sera appliqué contre la plaque bipolaire sur toute sa surface annulaire lors du montage de l'empilement, et le fond F_{B} de la tôle TB sera appliqué contre la membrane sur toute sa surface annulaire.

La figure 5 représente un joint injecteur composé de deux tôles métalliques TA et TB différentes, la première tôle TA étant identique à celle de la figure 3 et la deuxième étant différente parce qu'elle est pourvue de passages entre l'intérieur de l'anneau et l'extérieur. Le fond F_{B} du U de la tôle TB est discontinu le long de l'anneau au lieu d'être continu. Les passages P_{B} sont formés entre les zones de fond discontinues. Ils sont de préférence formés par emboutissage (si la tôle B est une tôle métallique), ou par moulage (si la tôle B est en polymère). Ils peuvent être formés aussi par découpage. Par ces passages, le fluide amené ou évacué peut passer entre l'intérieur du joint et l'extérieur. Là encore, la première tôle TA est appliquée contre la plaque bipolaire. La deuxième tôle TB est appliquée par les surfaces de fond discontinues F_{B} contre la membrane. Les passages P_{B} sont formés de préférence sur toute la hauteur des branches du U, excluant cependant l'épaisseur des parties repliées qui reste continue sur tout le pourtour du joint.

La figure 6 représente, en vue éclatée, la tôle métallique TA et la pièce complémentaire TB d'un joint étanche J_{A} dans le cas où cette pièce complémentaire est en matériau polymère. La pièce en matériau polymère, est destinée à être collée contre la tôle métallique TA ; sa forme extérieure après collage est la même que celle de la tôle TB, mais la pièce est massive et remplit l'intérieur du U de la tôle TA ; cette forme massive lui confère une rigidité suffisante.

La section radiale de la pièce complémentaire en matériau polymère est alors de préférence une forme de double U tête-bêche à fond plat, à branches évasées à extrémités repliées parallèlement au fond plat, l'espace enfermé par les branches du U étant plein. Les extrémités repliées du U de la pièce complémentaire sont facultatives, le collage de la pièce complémentaire pouvant se faire uniquement à l'intérieur du U de la tôle métallique.

La figure 7 représente une vue analogue à celle de la figure 6, pour un joint injecteur. Des passages P_{B} sont aménagés de place en place sous forme d'interruptions locales du corps massif du matériau polymère dans sa partie qui déborde en dehors du U de la tôle métallique. Il est préférable que les passages soient aménagés dans la pièce en matériau polymère plutôt que dans la tôle métallique.

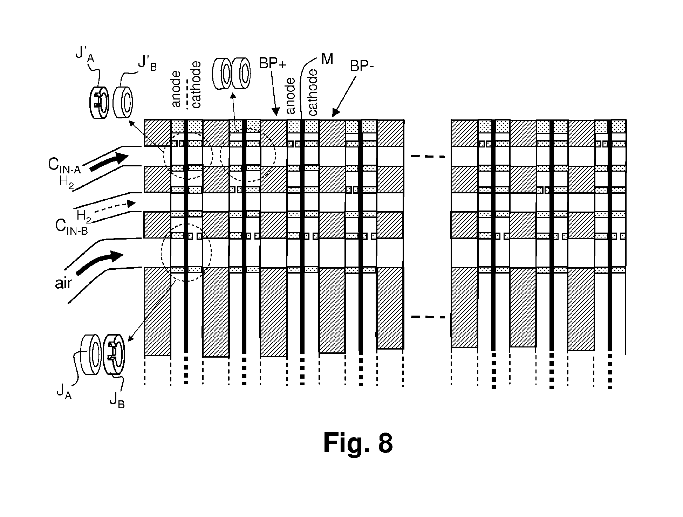

La figure 8 représente, avec le même principe de représentation que la figure 1, une application particulièrement intéressante dans laquelle la pile à combustible comporte non pas un mais deux collecteurs d'alimentation en hydrogène, chacun des collecteurs alimentant une cellule sur deux de l'empilement. Cela veut dire que si on considère la série d'ouvertures alignées correspondant au premier collecteur, une ouverture comprend un joint injecteur entre une plaque bipolaire et une membrane du côté de l'anode, et un joint étanche entre la plaque bipolaire et une autre membrane du côté de la cathode, mais l'ouverture suivante ne comprendra pas de joint injecteur mais deux joints étanches autour de l'ouverture pour empêcher toute alimentation par le collecteur à l'endroit de cette ouverture. Pour l'autre collecteur, on inversera. De cette manière une cellule sur deux sera alimentée par un collecteur et la suivante sera alimentée par l'autre collecteur. Les collecteurs sont alimentés par des conduits extérieurs séparés C_{IN-A} et C_{IN-B}.

Ce principe peut être généralisé à N (N>2) collecteurs alimentant en hydrogène une cellule sur N dans l'empilement : les ouvertures seront réparties en séries de N ouvertures successives parmi lesquelles une ouverture comprend un joint injecteur entre une plaque bipolaire et une membrane du côté de l'anode, et un joint d'étanchéité entre la plaque bipolaire et une autre membrane du côté de la cathode, mais les N-1 autres ouvertures de la série comprennent un joint d'étanchéité de chaque côté de la plaque bipolaire.

Tout ce qui vient d'être dit pour les collecteurs d'alimentation en hydrogène ou en oxygène ou air, est applicable aussi aux collecteurs d'évacuation. Le coût de fabrication est réduit par le fait que tous les joints injecteurs sont très semblables aux joints étanches, et qu'ils utilisent tous les deux la même première tôle, seule la deuxième tôle étant différente mais de dimensions générales (diamètre et épaisseur) identique pour les joints injecteurs et les joints étanches. Les joints pour les collecteurs d'alimentation et les joints pour les collecteurs d'évacuation peuvent être les mêmes.

## Revendications

1. Pile à combustible à cellules empilées comprenant une superposition de plaques dites plaques bipolaires (BP, BP') entre lesquelles sont disposés des ensembles comprenant à la fois une membrane (M) électrolytique et une électrode de chaque côté de la membrane, les plaques étant pourvues à leur périphérie d'ouvertures servant à amener les gaz réactifs, et d'ouvertures servant à évacuer les produits de la réaction, les ouvertures de plaques adjacentes étant alignées pour former des collecteurs d'alimentation ou d'évacuation traversant tout l'empilement de cellules, et les ouvertures des collecteurs étant entourées de joints individuels annulaires (J_{A}, J_{B}) séparés les uns des autres et distincts des plaques bipolaires, certains joints (J_{A}, J'_{B}) formant joints d'étanchéité entre l'ouverture et une cellule, et d'autres joints formant injecteurs (J'_{A}, J_{B}) pour un fluide à amener dans une cellule ou à évacuer d'une cellule, **caractérisée en ce que** les joints annulaires sont formés d'au moins une tôle métallique (TA) non plane et une pièce complémentaire (T_{B}), la tôle métallique ayant une section, dans un plan perpendiculaire au plan des ouvertures, en forme de U, dont les branches sont évasées et ont des extrémités repliées parallèlement au fond (F_{A}), le fond venant s'appuyer contre la plaque bipolaire autour de l'ouverture ou contre une membrane électrolytique, l'épaisseur du joint correspondant à la distance entre la plaque bipolaire et la membrane, les joints formant injecteurs étant pourvus de passages locaux (P_{B}) dans l'épaisseur du joint pour laisser passer le fluide et les joints formant joints d'étanchéité étant dépourvus de tels passages afin de conserver l'étanchéité, la pièce complémentaire pouvant être en métal ou en polymère et les passages étant formés dans la pièce complémentaire.

2. Pile à combustible selon la revendication 1, **caractérisée en ce que** la pièce complémentaire est une autre tôle métallique en forme de U et les deux tôles sont soudées face-à-face par leur partie plane repliée aux extrémités des branches du U, le fond du U de la tôle métallique est appliqué contre la partie bipolaire, et le fond du U de l'autre tôle est appliqué contre la membrane électrolytique, les passages des joints injecteurs étant formés dans le fond et les branches latérales du U mais non dans leurs parties supérieures planes repliées.

3. Pile à combustible selon la revendication 1, **caractérisée en ce que** la pièce complémentaire est une pièce de matériau polymère remplissant le fond du U de la tôle métallique et débordant par une partie plane au dessus de l'ouverture du U.

4. Pile à combustible selon la revendication 3, **caractérisé en ce que** les passages des joints formant injecteurs sont formés dans la pièce complémentaire en matériau polymère.

5. Pile à combustible selon l'une des revendications 1 à 4, **caractérisée en ce qu'**elle comporte un collecteur d'alimentation en hydrogène, avec, pour chaque ouverture dans une plaque bipolaire un joint injecteur entre une plaque bipolaire et une membrane du côté de l'anode, et un joint d'étanchéité complète entre la plaque bipolaire et une autre membrane du côté de la cathode.

6. Pile à combustible selon la revendication 5, **caractérisée en ce qu'**elle comporte un collecteur d'alimentation en oxygène ou en air, avec, pour chaque ouverture dans une plaque bipolaire un joint injecteur entre une plaque bipolaire et une membrane du côté de la cathode, et un joint d'étanchéité complète entre la plaque bipolaire et une autre membrane du côté de l'anode.

7. Pile à combustible selon l'une des revendications 1 à 4, **caractérisée en ce qu'**elle comporte N (N entier >1) collecteurs d'alimentation en hydrogène, avec distribution des ouvertures en N ouvertures successives parmi lesquelles une ouverture comprend un joint injecteur entre une plaque bipolaire et une membrane du côté de l'anode, et un joint d'étanchéité complète entre la plaque bipolaire et une autre membrane du côté de la cathode, et les N-1 autres ouvertures comprennent un joint d'étanchéité complète de chaque côté de la plaque bipolaire.

8. Pile à combustible selon l'une des revendications 5 à 7, **caractérisée en ce que** les ouvertures des collecteurs d'évacuation comprennent de chaque côté d'une plaque bipolaire, respectivement un joint injecteur pourvu de découpes et un joint d'étanchéité non pourvu de découpes.

## Patentansprüche

1. Batterie aus gestapelten Brennstoffzellen, umfassend eine Übereinanderlagerung von Platten, bipolare Platten (BP, BP') genannt, zwischen denen Baugruppen angeordnet sind, die gleichzeitig eine elektrolytische Membran (M) und eine Elektrode auf jeder Seite der Membran umfassen, wobei die Platten an ihrer Peripherie mit Öffnungen zum Zuführen der Reaktionsgase und mit Öffnungen zum Ablassen der Reaktionsprodukte versehen sind, wobei die Öffnungen von benachbarten Platten fluchten, um Speise- oder Ablasssammler zu bilden, die den ganzen Zellenstapel durchqueren, und wobei die Öffnungen von Sammlern von individuellen Verbindungsringen (J_{A}, J_{B}) umgeben sind, die getrennt voneinander und separat von den bipolaren Platten sind, wobei bestimmte Verbindungen (J_{A}, J'_{B}) Dichtungsverbindungen zwischen der Öffnung und einer Zelle bilden und andere Verbindungen Injektoren (J'_{A}, J_{B}) bilden, um ein Fluid einer Zelle zuoder aus einer Zelle abzuführen, **dadurch gekennzeichnet, dass** die Verbindungsringe aus wenigstens einem nichtplanaren Metallblech (TA) und einem komplementären Stück (T_{B}) gebildet sind, wobei das Metallblech in einer Ebene lotrecht zur Ebene der Öffnungen einen Querschnitt in Form eines U hat, dessen Schenkel konisch erweitert sind und parallel zum Boden (F_{A}) gefaltete Enden haben, wobei der Boden an der bipolaren Platte um die Öffnung oder an einer elektrolytischen Membran zur Anlage kommt, wobei die Dicke der Verbindung dem Abstand zwischen der bipolaren Platte und der Membran entspricht, wobei die Injektoren bildenden Verbindungen mit lokalen Kanälen (P_{B}) in der Dicke der Verbindung versehen sind, um das Fluid durchzulassen, und die Dichtungsverbindungen bildenden Verbindungen keine solchen Kanäle zum Gewährleisten der Dichtigkeit haben, wobei das komplementäre Stück aus Metall oder Polymer sein kann und die Kanäle in dem komplementären Stück ausgebildet sind.

2. Brennstoffzellen-Batterie nach Anspruch 1, **dadurch gekennzeichnet, dass** das komplementäre Stück ein anderes U-förmiges Metallblech ist und die beiden Bleche an ihrem ebenen Teil, der an den Enden der Schenkel des U gefaltet ist, Fläche an Fläche gelötet sind, der Boden des U des Metallblechs auf den bipolaren Teil und der Boden des U des anderen Blechs auf die elektrolytische Membran aufgebracht ist, wobei die Kanäle der Injektorverbindungen im Boden und in den lateralen Schenkeln des U, aber nicht in ihren gefalteten ebenen oberen Teilen ausgebildet sind.

3. Brennstoffzellen-Batterie nach Anspruch 1, **dadurch gekennzeichnet, dass** das komplementäre Stück ein Stück aus Polymermaterial ist, das den Boden des U des Metallblechs füllt und durch einen ebenen Teil über die Öffnung des U hinausgeht.

4. Brennstoffzellen-Batterie nach Anspruch 3, **dadurch gekennzeichnet, dass** die Kanäle von Injektoren bildenden Verbindungen in dem komplementären Stück aus Polymermaterial ausgebildet sind.

5. Brennstoffzellen-Batterie nach einem der Ansprüche 1 bis 4, **dadurch gekennzeichnet, dass** sie einen Wasserstoffspeisesammler umfasst, für jede Öffnung in einer bipolaren Platte mit einer Injektorverbindung zwischen einer bipolaren Platte und einer Membran auf der Anodenseite, und einer kompletten Dichtigkeitsverbindung zwischen der bipolaren Platte und einer anderen Membran auf der Kathodenseite.

6. Brennstoffzellen-Batterie nach Anspruch 5, **dadurch gekennzeichnet, dass** sie einen Sauerstoff- oder Luftspeisesammler umfasst, für jede Öffnung in einer bipolaren Platte mit einer Injektorverbindung zwischen einer bipolaren Platte und einer Membran auf der Kathodenseite und einer kompletten Dichtungsverbindung zwischen der bipolaren Platte und einer anderen Membran auf der Anodenseite.

7. Brennstoffzellen-Batterie nach einem der Ansprüche 1 bis 4, **dadurch gekennzeichnet, dass** sie N (N ist eine ganze Zahl > 1) Wasserstoffspeisesammler umfasst, mit einer Verteilung von Öffnungen in N aufeinander folgende Öffnungen, von denen eine Öffnung eine Injektorverbindung zwischen einer bipolaren Platte und einer Membran auf der Anodenseite und eine komplette Dichtungsverbindung zwischen der bipolaren Platte und einer anderen Membran auf der Kathodenseite umfasst und die N-1 anderen Öffnungen eine komplette Dichtungsverbindung auf jeder Seite der bipolaren Platte umfassen.

8. Brennstoffzellen-Batterie nach einem der Ansprüche 5 bis 7, **dadurch gekennzeichnet, dass** die Öffnungen der Ableitungssammler auf jeder Seite einer bipolaren Platte jeweils eine mit Ausschnitten versehene Injektorverbindung und eine nicht mit Ausschnitten versehene Dichtungsverbindung umfassen.

## Claims

1. A fuel cell battery comprising stacked cells, comprising a superposition of plates, called bipolar plates (BP, BP'), between which assemblies comprising both an electrolytic membrane (M) and an electrode on each side of the membrane are placed, the plates being provided, on their periphery, with apertures serving to deliver reactive gases, and with apertures serving to evacuate reaction products, the apertures of adjacent plates being aligned in order to form supply or evacuation manifolds that pass right through the stack of cells, and the apertures of the manifolds being encircled by individual ring joints (J_{A}, J_{B}) that are separated from one another and separate from the bipolar plates, certain joints (J_{A}, J'_{B}) forming sealing joints between the aperture and a cell, and other joints forming injectors (J'_{A}, J_{B}) for a fluid to be delivered to a cell or to be evacuated from a cell, **characterized in that** the ring joints are formed from at least one nonplanar metal sheet (TA) and a complementary part (T_{B}), the metal sheet having a U-shaped cross section in a plane perpendicular to the plane of the apertures, the arms of the U being flared and having ends folded parallel to the bottom (F_{A}), the bottom bearing against the bipolar plate around the aperture or against an electrolytic membrane, the thickness of the joint corresponding to the distance between the bipolar plate and the membrane, the joints forming injectors being provided with local passages (P_{B}) in the thickness of the joint in order to allow the fluid to pass, and the joints forming sealing joints being without such passages in order to maintain the seal, the complementary part possibly being made of metal or polymer, and the passages being formed in the complementary part.

2. The fuel cell battery as claimed in claim 1, **characterized in that** the complementary part is another U-shaped metal sheet and the two sheets are welded face-to-face via their folded planar portion located at the ends of the arms of the U, the bottom of the U of the metal sheet is applied against the bipolar portion, and the bottom of the U of the other sheet is applied against the electrolytic membrane, the passages of the injector joints being formed in the bottom and the lateral arms of the U, but not in their upper folded planar portions.

3. The fuel cell battery as claimed in claim 1, **characterized in that** the complementary pat is a polymer part filling the bottom of the U of the metal sheet, a planar portion thereof protruding beyond the opening of the U.

4. The fuel cell battery as claimed in claim 3, **characterized in that** the passages of the joints forming injectors are formed in the complementary part made of polymer.

5. The fuel cell battery as claimed in one of claims 1 to 4, **characterized in that** it comprises a hydrogen supply manifold, having, for each aperture in a bipolar plate, an injector joint between a bipolar plate and a membrane on the anode side, and a complete sealing joint between the bipolar plate and another membrane on the cathode side.

6. The fuel cell battery as claimed in claim 5, **characterized in that** it comprises an oxygen or air supply manifold, having, for each aperture in a bipolar plate, an injector joint between a bipolar plate and a membrane on the cathode side, and a complete sealing joint between the bipolar plate and another membrane on the anode side.

7. The fuel cell battery as claimed in one of claims 1 to 4, **characterized in that** it comprises N (N being an integer > 1) hydrogen supply manifolds, the apertures being divided into N successive apertures among which one aperture comprises an injector joint between a bipolar plate and a membrane on the anode side, and a complete sealing joint between the bipolar plate and another membrane on the cathode side, and the N-1 other apertures comprise a complete sealing joint on each side of the bipolar plate.

8. The fuel cell battery as claimed in one of claims 5 to 7, **characterized in that** the apertures of the evacuation manifolds comprise, on each side of a bipolar plate, an injector joint provided with notches and a sealing joint without notches, respectively.
